# EUROPEAN PATENT SPECIFICATION

(11) **EP 1 852 276 B1**
(45) Date of publication and mention of the grant of the patent: **11.08.2010**
(21) Application number: 05811746.6
(22) Date of filing: 30.11.2005
(51) Int. Cl.: B60C 9/20, B60C 9/18, B60C 9/22

(54) **PNEUMATIC TIRE**
LUFTREIFEN
PNEUMATIQUE

(30) Priority: 13.01.2005 JP 2005005982; 03.03.2005 JP 2005058454
(43) Date of publication of application: 07.11.2007
(73) Proprietor: Bridgestone Corporation, Tokyo 104-8340 (JP)
(72) Inventor: KAWAI, Takashi c/o Brigdestone Corporation, Techn. Ctr., Tokyo 187531 (JP); KOIDE, Masafumi c/o Brigdestone Corporation, Techn. Ctr., Tokyo 187531 (JP); ISHIYAMA, Makoto c/o Brigdestone Corporation, Tech. Ctr., Tokyo, 187531 (JP)
(74) Representative: Whalley, Kevin
(86) International application number: PCT/JP2005/022013
(87) International publication number: WO 2006/075455

(56) References cited:
- JP-A- 7 164 817
- JP-A- 8 058 310
- JP-A- 8 091 012
- JP-A- 2000 062 411
- JP-A- 2001 512 390
- JP-A- 2003 226 111

## Description

The present invention relates to a pneumatic tire in which a belt reinforcement layer overlying a belt layer is placed in a tread portion.

A known conventional pneumatic tire of this type is as described in, for example, Patent Document 1.

This pneumatic tire includes a carcass layer having opposite ends in a width direction folded around bead cores and toroidally extending, a belt layer placed radially outward of the carcass layer and constituted by two belt plies in which metal cords inclined in opposite directions at the same angle within the range of 15 to 35 degrees with respect to the tire equator are embedded, a tread placed radially outward of the belt layer, and a belt reinforcement layer placed between the belt layer and the tread and in which reinforcement cords made of organic fiber and extending substantially in parallel with the tire equator are embedded.

In the pneumatic tire, the reinforcement cords extending substantially in parallel with the tire equator in the belt reinforcement layer prevent the diameter of a tread portion of a pneumatic tire for a high performance passenger car, an aircraft, a truck, a bus, or the like from being significantly increased radially outward by a centrifugal force in high speed driving, thereby increasing high speed durability, and preventing a change in a ground contact shape by high speed driving to achieve high steering stability in a high speed range.

When such a pneumatic tire is driven under load, the tread portion is repeatedly subjected to circumferential out-of-plane bending deformation (deformation with a fold along the tire width direction) so as to significantly reduce the radius of curvature near a step-in position and a kick-out position of the pneumatic tire, while the tread portion is repeatedly subjected to circumferential out-of-plane bending deformation so as to increase the radius of curvature to infinity (to be flat) between the step-in position and the kick-out position. Patent Document 1: Japanese Patent Laid-Open No. 2002-46415 . Attention is also drawn to the disclosures of JP-A-8-91012 and JP-A-7-164817. Document JP-A-8-91012 discloses the features of the preamble of claim 1.

In such a pneumatic tire, the metal cords inclined at a small inclination angle with respect to the tire equator are embedded in the belt layer, and the reinforcement cords extending substantially in parallel with the tire equator are embedded in the belt reinforcement layer. Thus, when an internal pressure is charged into the pneumatic tire, high tension occurs in the metal cords in the belt layer and the reinforcement cords in the belt reinforcement layer, thereby increasing circumferential bending rigidity of the belt layer and the belt reinforcement layer, that is a composite value of the circumferential bending rigidity.
This restricts the circumferential out-of-plane bending deformation in the ground contact as described above, thereby increasing a vertical spring constant to reduce riding comfort, reducing a ground contact length to reduce a ground contact area, and reducing steering stability in low and middle speed ranges.

The present invention has an object to provide a pneumatic tire capable of increasing both riding comfort and steering stability while maintaining high speed durability of the tire.

The invention provides a pneumatic tire including: a carcass layer having opposite ends in a width direction folded around bead cores and toroidally extending; a belt layer placed radially outward of the carcass layer and constituted by at least two belt plies in which non-stretching belt cords inclined with respect to the tire equator S are embedded; a tread placed radially outward of the belt layer; and a belt reinforcement layer placed adjacent the belt layer and in which non-stretching reinforcement cords extending substantially in parallel with the tire equator S are embedded, wherein circumferential bending rigidity of a contact belt ply placed in contact with the belt reinforcement layer among the belt plies is made higher than circumferential bending rigidity of the remaining belt ply or plies, and wherein the belt reinforcement layer and the contact belt ply are arranged to be positioned near a neutral axis of bending, the neutral axis of bending being positioned near a boundary between the contact belt ply and the next adjacent belt ply.

In the present invention, the circumferential bending rigidity of the contact belt ply placed in contact with belt reinforcement layer among the belt plies is made higher than the circumferential bending rigidity of the remaining belt ply or plies, and thus the belt reinforcement layer having high circumferential bending rigidity and the contact belt ply having next high circumferential bending rigidity are collected near a neutral axis of bending positioned near a boundary thereof.
Thus, the belt reinforcement layer sufficiently exerts its tension-resisting function, while composite circumferential bending rigidity of the belt layer and the belt reinforcement layer is reduced. This reduces a vertical spring constant of the pneumatic tire to increase riding comfort, and increases ground contact length to increase a ground contact area and increase steering stability in all speed ranges.

On the other hand, when the belt ply having higher circumferential bending rigidity than the remaining belt ply or plies is placed in a position apart from the belt reinforcement layer, a sandwich structure is formed in which the belt reinforcement layer and the belt ply having high circumferential bending rigidity are placed apart from each other on opposite sides of a neutral axis of bending, and the composite circumferential bending rigidity is high as in conventional tires. Thus, such a structural arrangement cannot be used. Preferred configuration are defined in claims 2 to 13.

With the configuration as described in claim 2, riding comfort and steering stability can be increased as compared with the case where a belt ply having the minimum circumferential bending rigidity is placed closer to the belt reinforcement layer than a remote belt ply.
Further, with the configuration as described in claim 3, the circumferential bending rigidity of the contact belt ply can be easily made higher than the circumferential bending rigidity of the remaining belt ply or plies without changing the thickness of coating rubber between the belt cords in the belt ply.

The pneumatic tires described in claims 4 and 5 are preferable examples of the pneumatic tire described in claim 3. In these examples, the belt cords made of the above-described material are used in the remaining belt ply or plies to maintain in-plane rigidity of the belt layer at a high value.

As described in claim 6, the diameter of the belt cord in the contact belt ply may be made large to increase the in-plane rigidity of the belt layer, and also in this case, riding comfort and steering stability can be increased.
Further, as described in claim 7, a placement interval of the belt cords in the contact belt ply may be made small to increase the in-plane rigidity of the belt layer, and also in this case, riding comfort and steering stability can be increased.

In the invention according to claim 8, inclination angles θ with respect to the tire equator S of belt cords embedded in an adjacent belt ply and a next adjacent belt ply are increased in this order so that circumferential bending rigidity of the adjacent belt ply is higher than that of the next adjacent belt ply.

In such a tire, a tensile force or a compressive force generated in a position radially apart from the neutral axis of bending (generally on the adjacent belt ply) in ground contact deformation of the tread portion is applied to the next adjacent belt ply and the belt reinforcement layer in which the belt cords having relatively large inclination angles with respect to the tire equator are embedded. However, the belt cords in the next adjacent belt ply are inclined at the relatively large inclination angle θ with respect to the tire equator S, so that coating rubber between the belt cords is easily stretched or compressed by the tensile force or the compressive force to reduce a resistance function against the tensile force or the compressive force.
Thus, the circumferential out-of-plane bending rigidity in the tread portion is reduced, and a vertical spring constant of the pneumatic tire is reduced to increase riding comfort, and the ground contact length is increased to increase the ground contact area and increase steering stability.

With the configuration of the tire as described in claim 9, the circumferential out-of-plane bending rigidity in the tread portion can be sufficiently reduced even if the belt layer is constituted by three belt plies.
On the other hand, with the configuration as described in claim 10, the pneumatic tire can be produced using belt plies having the same cord inclination angle, thereby facilitating production to reduce costs.

With the configuration as described in claim 11, the amount of stretch or compression of the coating rubber between the belt cords in the next adjacent belt ply is increased, thereby reliably reducing the circumferential out-of-plane bending rigidity in the tread portion.
Also, with the configuration as described in claim 12, the belt reinforcement layer placed radially inward of the belt layer prevents the diameter of the tread portion from being increased radially outward in high speed driving, thereby ensuring steering stability in high speed driving as in the case where the belt reinforcement layer is placed radially outward of the belt layer.
Further, with the configuration as described in claim 13, the belt reinforcement layer can be formed with high efficiency and accuracy.
The invention will be further described with reference to the accompanying drawings, wherein

Figure 1 is a meridian sectional view of an embodiment of the present invention;
Figure 2 is a partially cutaway plan view of a tread portion thereof;
Figure 3 is a meridian sectional view of another embodiment of the present invention;
Figure 4 is a partially cutaway plan view of a tread portion thereof;
Figure 5 is a partially cutaway plan view of a tread portion of a further embodiment; and
Figure 6 is a partially cutaway plan view of a tread portion of a further embodiment.

Now, an embodiment of the present invention will be described with reference to the drawings.

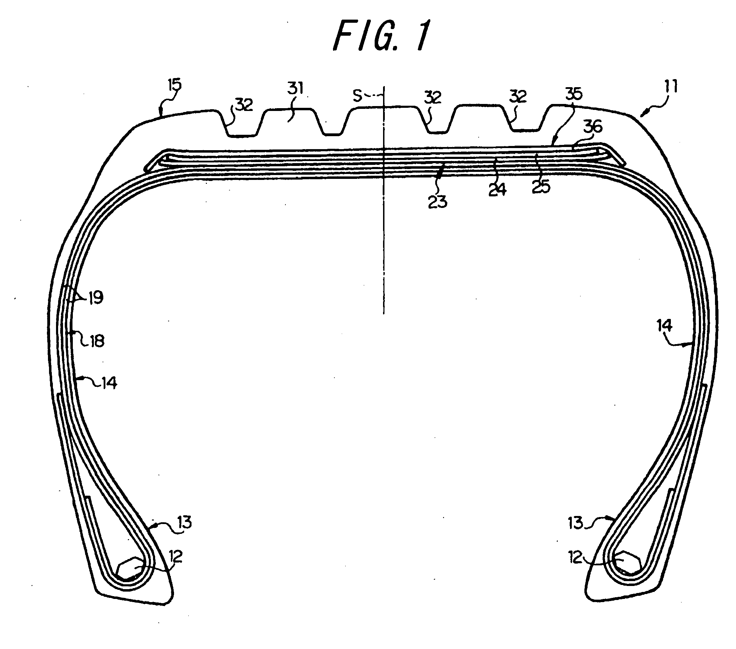

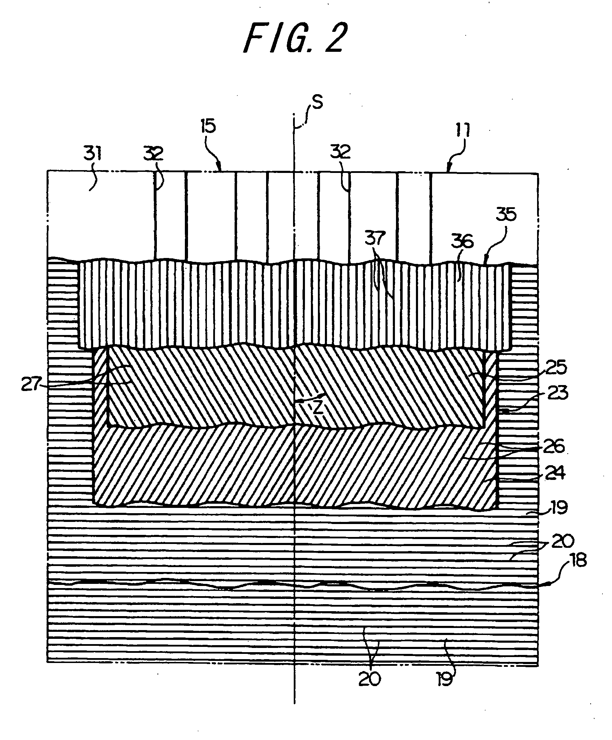

In Figures 1 and 2, reference numeral 11 denotes a pneumatic radial tire for a passenger car capable of high speed driving. The pneumatic tire 11 includes a pair of bead portions 13 in which bead cores 12 are embedded, side wall portions 14 extending substantially radially outward from the bead portions 13, and a generally cylindrical tread portion 15 that connects radially outer ends of the side wall portions 14. The present invention may also be applied to a pneumatic tire for an aircraft, a truck, or a bus.

The pneumatic tire 11 includes a carcass layer 18 that toroidally extends between the bead cores 12 and reinforces the side wall portions 14 and the tread portion 15, and opposite ends in a width direction of the carcass layer 18 are folded around the bead cores 12 from axially inward to axially outward. The carcass layer 18 is constituted by at least one, herein two carcass plies 19, and in the carcass plies 19, a plurality of carcass cords 20 parallel to each other are embedded that are made of nylon, aromatic polyamide, steel or the like (herein nylon), and cross the tire equator S at a cord angle of 70 to 90 degree, that is, extend radially (in a meridian direction).

Reference numeral 23 denotes a belt layer placed radially outward of the carcass layer 18, and the belt layer 23 is constituted by at least two belt plies, herein two belt plies 24 and 25 laminated in this order radially outward. In each of the belt plies 24 and 25, a plurality of non-stretching belt cords 26 and 27 parallel to each other are embedded, and the belt cords 26 and 27 are constituted by strands or monofilaments. The belt cords 26 and 27 in the two belt plies 24 and 25 are inclined at the same inclination angle Z within the range of 15 to 35 degrees with respect to the tire equator S and inclined in opposite directions with respect to the tire equator S in at least two belt plies and cross each other for maintaining belt in-plane rigidity at a high value.

Reference numeral 31 denotes a tread made of rubber and placed radially outward of the carcass layer 18 and the belt layer 23. On an outer surface (a grounding surface) of the tread 31, a plurality of, herein four main grooves 32 extending circumferentially continuously are formed for improvement in drainage performance. On the outer surface of the tread 31, a plurality of lateral grooves extending in a width direction or a slanting direction may be formed in some cases.

Reference numeral 35 denotes a belt reinforcement layer that is placed to overlie the belt layer 23 in the tread portion 15 between the belt layer 23 and the tread 31, and covers the entire width of the belt layer 23. The belt reinforcement layer 35 is constituted by at least one (herein one) reinforcement ply 36, and a non-stretching reinforcement cord 37 extending substantially in parallel with the tire equator S is embedded in the reinforcement ply 36. The belt reinforcement layer 35 that covers the entire width of the belt layer 23 radially outward of the belt layer 23 is thus provided to strongly prevent the diameter of the tread portion 15 from being increased radially outward by a centrifugal force in high speed driving, thereby ensuring high speed durability of the pneumatic tire 11 and also preventing a change in the ground contact shape in high speed driving to achieve high steering stability.

The belt reinforcement layer 35 can be formed, for example, by winding, into a spiral shape, a strip having a constant width and constituted by one or more reinforcement cords 37 arranged in parallel and rubber-coated on the outside of the belt layer 23 with side edges in contact with each other. The belt reinforcement layer 35 can be formed in this manner with high efficiency and accuracy. The reinforcement cord 37 in the belt reinforcement layer 35 may be made of steel, but is preferably made of aromatic polyamide as in the embodiment. This is because the reinforcement cord 37 can reduce the weight of the tire as well as strongly suppress the increase in the diameter of the tread portion 15 even if the temperature of the tread portion 15 is increased by high speed driving.

When the pneumatic tire 11 as described above is driven under load, the tread portion 15 is repeatedly subjected to out-of-plane bending deformation near a step-in position and a kick-out position of the pneumatic tire 11 and therebetween. At this time, the belt layer 23 and the belt reinforcement layer 35 have high circumferential bending rigidity due to tension caused by the internal pressure charged in the tire and thus the out-of-plane bending deformation seems to be restricted.

However, in this embodiment, circumferential bending rigidity of the belt ply 25 is made higher than the circumferential bending rigidity of the remaining belt ply 24, the belt ply 25 is placed in contact with the belt reinforcement layer 35 without anything therebetween, and thus the circumferential bending rigidity of the contact belt ply, herein the belt ply 25 placed in contact with the belt reinforcement layer 35 is made higher than the circumferential bending rigidity of the remaining belt ply, herein the remote belt ply 24 most apart from the belt reinforcement layer 35.

Thus, the belt reinforcement layer 35 having the high circumferential bending rigidity and the contact belt ply 25 having the high circumferential bending rigidity next to the belt reinforcement layer 35 are collected near a neutral axis of bending positioned near a boundary thereof. Thus, composite circumferential bending rigidity of the belt layer 23 and the belt reinforcement layer 35 is reduced, and a vertical spring constant of the pneumatic tire 11 is reduced to reduce push-up feeling in running over a protrusion or stiff feeling on a rough road and increase riding comfort, and increase ground contact length to increase ground contact area and increase steering stability in all speed ranges.

On the other hand, when the belt ply having higher circumferential bending rigidity than the remaining belt ply is placed in a position apart from the belt reinforcement layer 35, a sandwich structure is formed in which the belt reinforcement layer 35 and the belt ply having high circumferential bending rigidity are placed apart from each other on opposite sides of the neutral axis of bending, thereby increasing the composite circumferential bending rigidity as is conventional.

When the belt cord 27 embedded in the contact belt ply 25 is made of steel, while the belt cord 26 embedded in the remote belt ply 24 is made of material different from that of the belt cord 27, for example, organic fiber such as aromatic polyamide or glass fiber, the Young's modulus of the belt cord 27 is made higher than the Young's modulus of the belt cord 26, and thus the circumferential bending rigidity of the contact belt ply 25 can be made higher than the circumferential bending rigidity of the remaining remote belt ply 24.

The Young's modulus of the belt cord 27 in the contact belt ply 25 is thus made larger than the Young's modulus of the belt cord 26 in the remote belt ply 24, and thus the circumferential bending rigidity of the contact belt ply 25 can be easily made higher than the circumferential bending rigidity of the remote belt ply 24 without changing a thickness of coating rubber between the belt cords 26 and 27. Using the belt cord 26 made of the above described material allows the in-plane rigidity of the belt layer 23 to be maintained at a high value.

The circumferential large tensile force and compressive force are applied to the position apart from the neutral axis of bending by the out-of-plane bending deformation of the tread portion 15 as described above. The belt cord 26 made of organic fiber (aromatic polyamide) or glass fiber rather than steel is embedded in the remote belt ply 24 far apart from the neutral axis of bending as described above, and thus the belt cord 26 merely functions as low resistance to the out-of-plane bending deformation, and allows the out-of-plane bending deformation of the tread portion 15.
Thus, the tensile force and the compressive force hardly reduce riding comfort and steering stability of the pneumatic tire 11.

The diameter of the belt cord 27 embedded in the contact belt ply 25 may be made larger than the diameter of the belt cord 26 embedded in the remote belt ply 24, and thus the circumferential bending rigidity of the contact belt ply 25 may be made higher than the circumferential bending rigidity of the remote belt ply 24. Thus, the diameter of the belt cord 27 in the contact belt ply 25 is made large to increase the in-plane rigidity of the belt layer 23, and also in this case, riding comfort and steering stability can be easily increased.

Further, a placement interval of the belt cords 27 (a distance between center points of adjacent belt cords) embedded in the contact belt ply 25 is made smaller than a placement interval of the belt cords 26 embedded in the remote belt ply 24, that is the belt cords 27 are placed with higher density, and thus the circumferential bending rigidity of the contact belt ply 25 can be made higher than the circumferential bending rigidity of the remote belt ply 24. The placement interval of the belt cords 27 in the contact belt ply 25 is thus made small to increase the in-plane rigidity of the belt layer 23, and also in this case, riding comfort and steering stability can be easily increased.

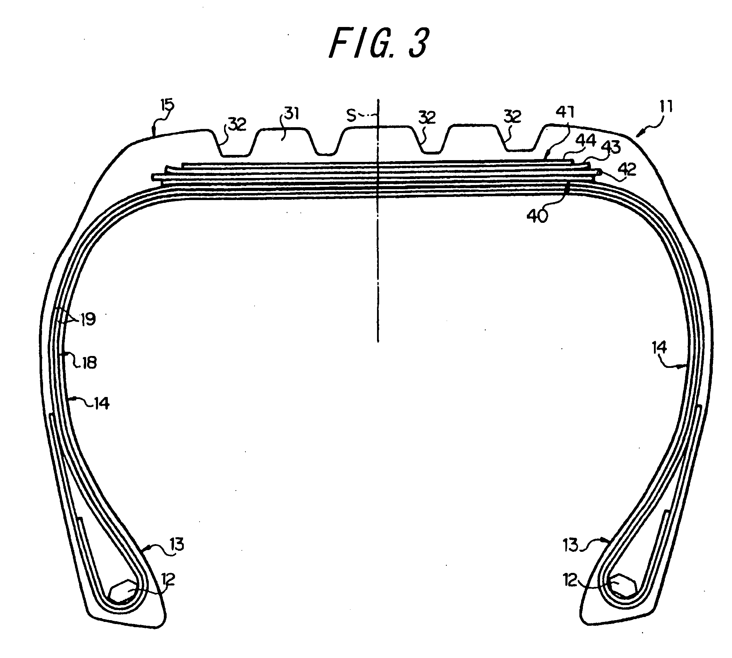

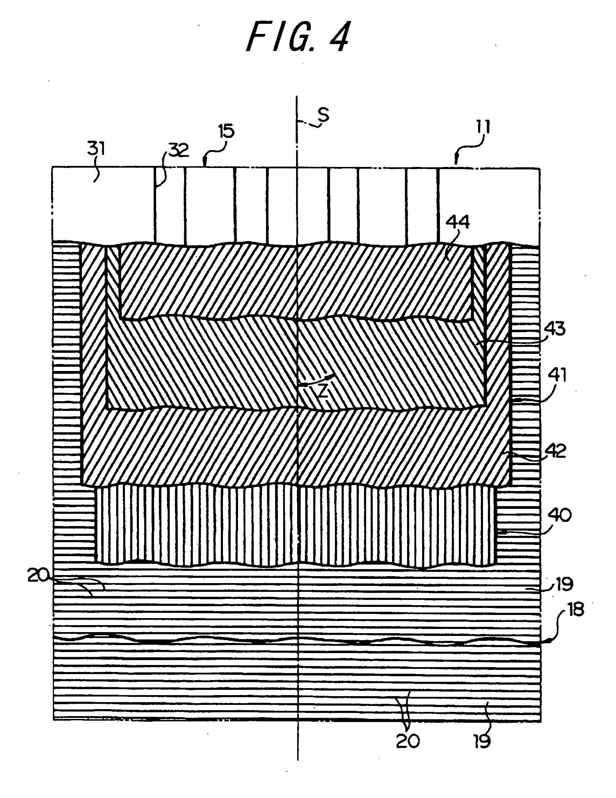

Figures 3 and 4 show another embodiment of the present invention. In this embodiment, a belt reinforcement layer 40 having a slightly smaller width than a belt layer 41 is placed to underlie the belt layer 41 between the belt layer 41 and a carcass layer 18, and the belt layer 41 is constituted by three belt plies: a contact belt ply 42 placed in contact with the belt reinforcement layer 40, a remote belt ply 44 most apart from the belt reinforcement layer 40, and an intermediate belt ply 43 placed between the belt plies 42 and 44.

Thus, the contact belt ply 42, the intermediate belt ply 43, and the remote belt ply 44 are placed radially outward in this order, and circumferential bending rigidity of the belt plies 42, 43 and 44 is reduced in this order. Thus, the circumferential bending rigidity of the belt ply 42 is the maximum, the circumferential bending rigidity of the remote belt ply 44 is the minimum, and the circumferential bending rigidity of the intermediate belt ply 43 is the intermediate value.

Thus, also in this embodiment, the belt reinforcement layer 40 and the contact belt ply 42 having high circumferential bending rigidity are collected near the neutral axis of bending, thereby reducing the composite circumferential bending rigidity of the belt layer 41 and the belt reinforcement layer 40 and increasing riding comfort and steering stability. Further, the circumferential bending rigidity of the remote belt ply 44 most apart from the belt reinforcement layer 40 is the minimum among the belt plies 42, 43 and 44 as described above, thereby increasing riding comfort and steering stability as compared with the case where the belt ply having the minimum circumferential bending rigidity is placed closer to the belt reinforcement layer 40 than the remote belt ply 44.

In this embodiment, the belt reinforcement layer 40 is placed between the belt layer 41 and the carcass layer 18 as described above. When the belt reinforcement layer 40 is provided in such a position, the belt reinforcement layer 40 placed radially inward of the belt layer 41 can prevent the diameter of the tread portion 15 from being increased radially outward in high speed driving, thereby ensuring steering stability in high speed driving as in the case where the belt reinforcement layer 40 is placed radially outward of the belt layer 41.

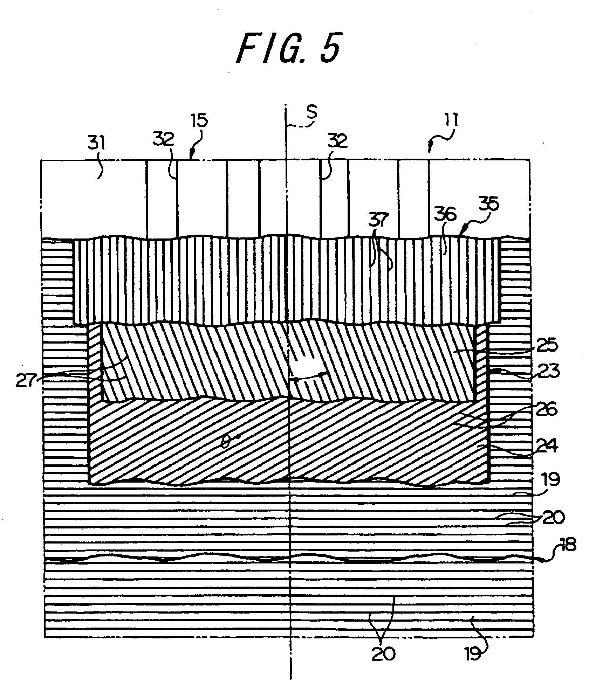

Figure 5 is a partially cutaway plan view of a tread portion of a further embodiment of the present invention, and this tire has the same structure as the tire in Figure 1 when viewed in the meridian section.
Belt cords 26 and 27 that form belt plies 24 and 25, respectively, can be constituted by strands or monofilaments made of steel, aromatic polyamide or the like, and the belt cords 26 and 27 in the belt plies 24 and 25 are inclined in opposite directions with respect to the tire equator S, and cross each other.

As described above, reference numeral 35 denotes a belt reinforcement layer placed to overlie a belt layer 23 in a tread portion 15 between the belt layer 23 and a tread 31, the belt reinforcement layer 35 is constituted by at least one reinforcement ply 36, and a non-stretching reinforcement cord 37 extending substantially in parallel with the tire equator S is embedded in each reinforcement ply 36.

Thus, the belt reinforcement layer 35 that covers the belt layer 23 is provided radially outward of the belt layer 23 to strongly prevent the diameter of the tread portion 15 from being increased radially outward by a centrifugal force in high speed driving, thereby allowing high speed durability of the pneumatic tire 11 to be reliably maintained.

Also in this case, for forming the belt reinforcement layer 35 with high efficiency and accuracy, it is preferable to form the belt reinforcement layer 35, for example, by winding, into a spiral shape, a ribbon-like member having a constant width and constituted by one or more reinforcement cords 37 arranged in parallel and rubber-coated on the outside of the belt layer 23. The reinforcement cord 37 in the belt reinforcement layer 35 may be made of steel, but is preferably made of aromatic polyamide for reducing the weight of the tire and strongly suppressing the increase in the diameter of the tread portion 15 even if the temperature of the tread portion 15 is increased by high speed driving.

When the pneumatic tire 11 having such a reinforcement structure is driven under load, the tread portion 15 having an arcuate shape in the direction of the tire equator is deformed to be flat in a ground contact area, and a circumferential tensile force is generated in the belt ply 24 positioned radially inward of the neutral axis of bending (generally positioned on the belt ply 25). When the inclination angle θ of the belt cord 26 in the belt ply 24 with respect to the tire equator S is small, the belt ply 24 functions as resistance that is hard to be stretched in the direction of the tire equator S and resistant to the ground contact deformation.

Specifically, in the conventional technique, the inclination angle θ is often small within a range of 20 to 30 degrees for increasing in-plane rigidity, and thus the belt ply 24 functions as large resistance to the tensile force as described above. On the other hand, a circumferential compressive force is generated in the belt reinforcement layer 35 positioned radially outward of the neutral axis of bending, but the reinforcement cord 37 in the belt reinforcement layer 35 extends substantially in parallel with the tire equator S, and thus the belt reinforcement layer 35 functions as resistance that is resistant to the compressive force as in the conventional technique.

Thus, in the embodiment, when, among the belt plies 24 and 25, the belt ply placed most adjacent to the belt reinforcement layer 35 is an adjacent belt ply 25, and the belt ply next adjacent to the belt reinforcement layer 35 is a next adjacent belt ply 24, the inclination angles θ of the belt cords 27 and 26 embedded in the adjacent belt ply 25 and the next adjacent belt ply 24, respectively, with respect to the tire equator S are increased in this order, that is, in order of the belt cords 27 and 26. Thus, the tensile force is applied to the next adjacent belt ply 24 having lower circumferential bending rigidity and in which the belt cord 26 having a relatively large inclination angle θ with respect to the tire equator S is embedded.

The belt cord 26 in the next adjacent belt ply 24 placed apart from the belt reinforcement layer 35 is inclined at the relatively large inclination angle θ with respect to the tire equator S, coating rubber between the belt cords 26 is stretched by the tensile force, and thus the next adjacent belt ply 24 placed on one side (a tensile side) of the neutral axis of bending is reduced in a resistance function to the tensile force. Thus, the circumferential out-of-plane bending rigidity (rigidity against bending with a fold along a tire width direction) of the entire tread portion 15 is reduced, and a vertical spring constant of the pneumatic tire 11 is reduced to reduce push-up feeling in running over a protrusion or stiff feeling on a rough road and increase riding comfort, and increase a ground contact length to increase a ground contact area and increase steering stability.

The belt cord 26 in the next adjacent belt ply 24 is preferably inclined at an inclination angle θ of 45 degrees or more with respect to the tire equator S. This is because with an inclination angle θ of 45 degrees or more, the belt cord 26 extends in the width direction rather than the circumferential direction, the amount of stretch of the coating rubber between the belt cords 26 in the next adjacent belt ply 24 is increased, and thus the circumferential out-of-plane bending rigidity in the tread portion 15 can be reliably reduced. The inclination angle θ is preferably less than 85 degrees because an inclination angle θ more than 85 degrees may reduce in-plane shearing rigidity and cause an insufficient lateral force generated in cornering.

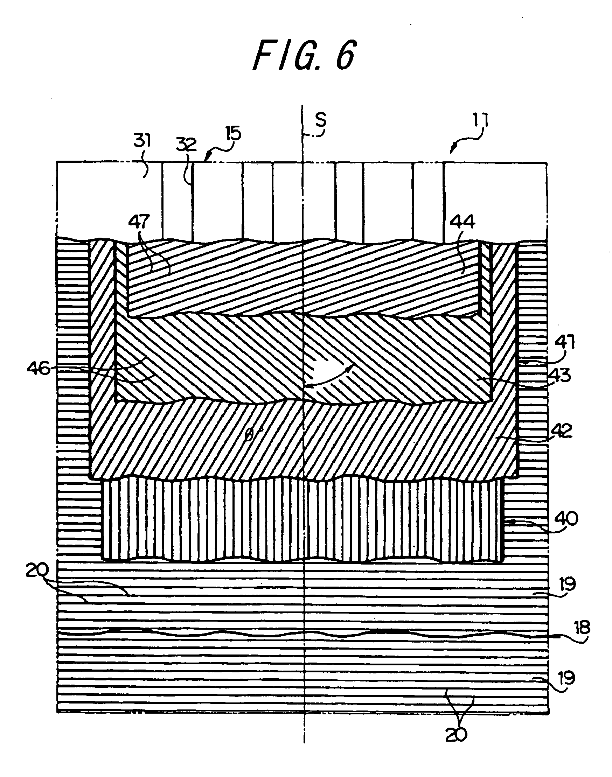

Figure 6 is a partially cutaway plan view similar to Figure 5 of a further embodiment of the present invention. The structure of this embodiment is the same as shown in Figure 3 when viewed in the meridian section.
A belt reinforcement layer 40 is herein placed to underlie a belt layer 41 between the belt layer 41 and a carcass layer 18, and the belt layer 41 is constituted by three belt plies: an adjacent belt ply 42, a next adjacent belt ply 43, and further a remote belt ply 44 most apart from the belt reinforcement layer 40. Thus, the adjacent belt ply 42, the next adjacent belt ply 43, and the remote belt ply 44 are placed radially outward in this order, and a neutral axis of bending is positioned near a boundary between the adjacent belt ply 42 and the next adjacent belt ply 43.

Thus, when a tread portion 15 is deformed from an arcuate shape to a flat shape in a ground contact area, a circumferential tensile force is applied to the belt reinforcement layer 40 and the adjacent belt ply 42, and a circumferential compressive force is applied to the next adjacent belt ply 43 and the remote belt ply 44.
In the embodiment, an inclination angle θ of the belt cord 47 embedded in the remote belt ply 44 with respect to the tire equator S is made larger than an inclination angle θ of the belt cord 46 embedded in the next adjacent belt ply 43 with respect to the tire equator S. Thus, even when the belt layer 41 is constituted by the three belt plies, coating rubber positioned between the belt cords 47 in the added remote belt ply 44 is easily compressed, and thus circumferential out-of-plane bending rigidity in the tread portion 15 can be sufficiently reduced.

In the embodiment, as described above, the belt reinforcement layer 40 is placed between the belt layer 41 and the carcass layer 18, and also when the belt reinforcement layer 40 is provided in such a position, the belt reinforcement layer 40 placed radially inward of the belt layer 41 can prevent the diameter of the tread portion 15 from being increased radially outward in high speed driving, thereby ensuring steering stability in high speed driving as in the case where the belt reinforcement layer 40 is placed radially outward of the belt layer 41.

In the present invention, the inclination angle θ of the belt cord 47 embedded in the remote belt ply 44 with respect to the tire equator S may be the same as the inclination angle θ of the belt cord 46 embedded in the next adjacent belt ply 43 with respect to the tire equator S.
In this case, belt plies having the same cord inclination angle can be used as the next adjacent belt ply 43 and the remote belt ply 44, thereby facilitating production of the pneumatic tire 11 and reducing costs.
Other configurations and operations are the same as in the description with reference to Figure 5.

### EXAMPLE 1

Next, Test Example 1 will be described. In this test, there were prepared: a conventional tire 1 as shown in Figures 1 and 2 in which cords A are embedded in remote and contact belt plies at a placement interval (a distance between center points of adjacent belt cords) of 1.2 mm; a conventional tire 2 similar to the conventional tire 1 except that belt cords in the remote and contact belt plies are cords B; an embodiment tire 1 as shown in Figures 1 and 2 in which the cords B are embedded in the remote belt ply at a placement interval of 1.2 mm and the cords A are embedded in the contact belt ply at a placement interval of 1.2 mm; an embodiment tire 2 similar to the embodiment tire 1 except that belt cords in the remote belt ply are cords C; an embodiment tire 3 similar to the embodiment tire 1 except that belt cords in the remote belt ply are cords D and belt cords in the contact belt ply are cords E; and an embodiment tire 4 similar to the conventional tire 1 except that placement intervals of the belt cords in the remote and contact belt plies are 1.5 mm and 0.9 mm, respectively.

As comparative tires, there were also prepared: comparative tires 1, 2 and 3 similar to the embodiment tires 1, 2 and 3 except that cords in the remote belt plies and cords in the contact belt plies in the embodiment tires 1, 2 and 3 are interchanged; and a comparative tire 4 similar to the embodiment tire 4 except that the placement intervals of the belt cords in the remote and contact belt plies are interchanged.

The cord A is a belt cord constituted by strands of three steel filaments having a diameter of 0.3 mm, the cord B is a belt cord constituted by strands of aromatic polyamide filaments having a diameter of 0.7 mm, the cord C is a belt cord constituted by strands of glass fiber filaments having a diameter of 0.7 mm, the cord D is a belt cord constituted by strands of two steel filaments having a diameter of 0.3 mm, and the cord E is a belt cord constituted by strands of four steel filaments having a diameter of 0.3 mm.

Each of the tires was a high performance tire for a passenger car having the size of 245/55R17, a carcass layer of each tire was constituted by two carcass plies in which nylon cords that cross the tire equator S at 90 degrees are embedded, and reinforcement cords constituted by strands of aromatic polyamide filaments and having a diameter of 0.7 mm were embedded at a placement interval of 1.0 mm in the belt reinforcement layer. The belt cord in the remote belt ply was inclined to the upper right at 30 degrees with respect to the tire equator S, and the belt cord in the contact belt ply was inclined to the upper left at 30 degrees with respect to the tire equator S.

Then, internal pressure of 220 kPa was charged into each tire, then a coating was applied to an outer surface of a tread portion, and the tread portion was pushed on white paper under load of 6 kN before the coating dries to transfer a ground contact shape onto the paper. Then, a ground contact length (a maximum length in a direction of the tire equator in the ground contact shape, represented in mm) was measured from the ground contact shape of each tire, and the results thereof are shown in Table 1.
The embodiment tires in which the belt reinforcement layer and the contact belt ply having high circumferential bending rigidity are placed in contact with each other all have a longer ground contact length than the comparative tires in which the belt reinforcement layer and the belt ply having high circumferential bending rigidity are placed apart from each other.

**[Table 1]**

| | Conventional tire | | Embodiment tire | | | |
|---|---|---|---|---|---|---|
| | 1 | 2 | 1 | 2 | 3 | 4 |
| Ground contact length | 130 | 144 | 140 | 138 | 135 | 135 |
| Steering stability | 70 | 40 | 70 | 80 | 90 | 90 |
| Riding comfort | 6 | 9 | 8 | 8 | 7 | 7 |

| | Comparative tire | | | | | |
|---|---|---|---|---|---|---|
| | 1 | 2 | 3 | 4 | | |
| Ground contact length | 133 | 131 | 126 | 125 | | |
| Steering stability | 60 | 70 | 60 | 60 | | |
| Riding comfort | 7 | 6 | 5 | 5 | | |

Next, each tire was mounted to a high performance passenger car, and a skilled test driver drove the car on a dry road surface of a circuit at a maximum speed of 200 km an hour, and evaluated steering stability. The evaluation for each tire on a scale of 100 is shown in Table 1. For the conventional tire 2, belt in-plane rigidity is reduced to reduce steering stability although the ground contact length is longer than that of the conventional tire 1. The embodiment tires in which the belt reinforcement layer and the contact belt ply having high circumferential bending rigidity are placed in contact with each other all have long ground contact lengths, and thus obtain higher evaluations than the comparative tires in which the belt reinforcement layer and the contact belt ply are placed apart from each other.

Next, the skilled test driver on the same passenger car as described above drove the car on an irregular road and a motorway junction prepared on a test course, and evaluated vibration riding comfort. The evaluations on a scale of 10 are shown in Table 1. The comparative tire 2 provided good riding comfort because the aromatic polyamide belt cords are embedded in all the belt plies, and each of the embodiment tires similarly provided good riding comfort.

### EXAMPLE 2

Next, Test Example 2 will be described. In this test, there were prepared: a conventional tire 3 as shown in Figures 3 and 4 in which cords A are embedded in remote, intermediate, and contact belt plies at a placement interval of 1.2 mm; a conventional tire 4 similar to the conventional tire 3 except that belt cords in the remote, intermediate, contact belt plies are cords B; an embodiment tire 5 similar to the conventional tire 3 except that belt cords in the remote and intermediate belt plies are the cords B; and a comparative tire 5 similar to the embodiment tire 5 except that the cords in the remote belt ply and the cords in the contact belt ply are interchanged.

Each of the tires was a high performance tire for a passenger car having the size of 245/55R17, a carcass layer of each tire was constituted by two carcass plies in which nylon cords that cross the tire equator S at 90 degrees are embedded, and reinforcement cords constituted by strands of aromatic polyamide filaments and having a diameter of 0.7 mm were embedded at a placement interval of 1.0 mm in the belt reinforcement layer. The belt cord in the remote belt ply was inclined to the upper right at 30 degrees with respect to the tire equator S, the belt cord in the intermediate belt ply was inclined to the upper left at 30 degrees with respect to the tire equator S, and the belt cord in the contact belt ply was inclined to the upper right at 30 degrees with respect to the tire equator S.

Then, a ground contact length (mm) was measured from a ground contact shape of each tire as described above, and the results thereof are shown in Table 2. The embodiment tire 5 in which the belt reinforcement layer and the contact belt ply having high circumferential bending rigidity are placed in contact with each other has a longer ground contact length than the comparative tire 5 in which the belt reinforcement layer and the belt ply having high circumferential bending rigidity are placed apart from each other. Steering stability of each tire was evaluated as described above, and the evaluations are shown in Table 2.

**[Table 2]**

| | Conventional tire | | Embodiment tire | Comparative tire |
|---|---|---|---|---|
| | 3 | 4 | 5 | 5 |
| Ground contact length | 123 | 139 | 137 | 126 |
| Steering stability | 70 | 50 | 80 | 60 |
| Riding comfort | 5 | 8 | 7 | 6 |

The belt layer is constituted by three belt plies to increase belt in-plane rigidity, and thus the conventional tire 3 has a shorter ground contact length than the conventional tire 1, and the same steering stability as in the conventional tire 1. On the other hand, the conventional tire 4 has lower steering stability than the conventional tire 3 because of a reduction in the belt in-plane rigidity. The embodiment tire 5 in which the belt reinforcement layer and the contact belt ply having high circumferential bending rigidity are placed in contact with each other has a longer ground contact length than the comparative tire in which the belt reinforcement layer and the belt ply having high circumferential bending rigidity are placed apart from each other and has increased steering stability.

Next, vibration riding comfort of each tire was evaluated as described above, and the evaluations are shown in Table 2. The The conventional tire 4 provided good riding comfort because the aromatic polyamide belt cords are embedded in all the belt plies, and the embodiment tire 5 similarly provided good riding comfort.

### EXAMPLE 3

Next, Test Example 3 will be described. In this test, there were provided: a conventional tire 5 as shown in Figure 5 in which inclination angles θ of belt cords in a next adjacent belt ply and an adjacent belt ply are 40 degrees to the upper right and 40 degrees to the upper left, respectively, and an inclination angle of a reinforcement cord in a belt reinforcement layer is 0 degree; an embodiment tire 6 similar to the conventional tire 5 except that the inclination angles θ of the belt cords in the next adjacent belt ply and the adjacent belt ply are 60 degrees to the upper right and 20 degrees to the upper left, respectively; and a comparative tire 6 similar to the conventional tire 5 except that the inclination angles θ of the belt cords in the next adjacent belt ply and the adjacent belt ply are 20 degrees to the upper right and 60 degrees to the upper left, respectively.

Each of the tires was a high performance tire for a passenger car having the size of 245/55R17, and a carcass layer of each tire was constituted by two carcass plies in which nylon cords that cross the tire equator S at 90 degrees were embedded. Belt cords constituted by strands of three steel filaments having a diameter of 0.3 mm were embedded at a placement interval (a distance between center points of adjacent belt cords) of 1.2 mm in the belt ply of each tire, while reinforcement cords constituted by strands of aromatic polyamide filaments and having a diameter of 0.7 mm were embedded at a placement interval of 1.0 mm in the belt reinforcement layer of each tire.

Then, internal pressure of 220 kPa was charged into each tire, then a coating was applied to an outer surface of a tread portion, and the tread portion was pushed on white paper under load of 6 kN before the coating dries to transfer a ground contact shape onto the paper. Then, a maximum length (a ground contact length) in a direction of the tire equator in the ground contact shape of each tire was measured.
The results were that the length in the conventional tire 5 was 135 mm, while the length in the embodiment tire 6 was increased to 142 mm because of a reduction in circumferential out-of-plane bending rigidity. The length in the comparative tire 6 was reduced to 125 mm because of an increase in out-of-plane bending rigidity.

Next, each tire was mounted to a high performance passenger car, and a skilled test driver drove the car on a dry road surface of a circuit at a maximum speed of 200 km an hour, and evaluated steering stability
The evaluations on a scale of 100 are as follows. Steering stability of the conventional tire 5 was 70 and steering stability of the comparative tire 6 was 60, while steering stability of the embodiment tire 6 was increased to 80. This may be because the ground contact length was increased to increase the ground contact area as described above.

Next, the skilled test driver on the same passenger car as described above drove the car on an irregular road and a motorway junction prepared on a test course, and evaluated vibration riding comfort.
The evaluations on a scale of 10 are as follows. Vibration riding comfort of the conventional tire 5 was 6 and vibration riding comfort of the comparative tire 6 was 5, while vibration riding comfort of the embodiment tire 6 was increased to 7.

### EXAMPLE 4

Next, Test Example 4 will be described. In this test, there were prepared: a conventional tire 6 in which an inclination angle of a reinforcement cord in a belt reinforcement layer is 0 degree, and inclination angles θ of belt cords in adjacent, next adjacent, and remote belt plies are 50 degrees to the upper right, 50 degrees to the upper left, and 50 degrees to the upper right, respectively; an embodiment tire 7 similar to the conventional tire 6 except that the inclination angles θ of the belt cords in the adjacent, next adjacent, and remote belt plies are 30 degrees to the upper right, 50 degrees to the upper left, and 70 degrees to the upper right, respectively; an embodiment tire 8 similar to the conventional tire 6 except that the inclination angles θ of the belt cords in the adjacent, next adjacent, and remote belt plies are 50 degrees to the upper right, 70 degrees to the upper left, and 70 degrees to the upper right; and a comparative tire 7 similar to the conventional tire 6 except that the inclination angles θ of the belt cords in the adjacent, next adjacent, and remote belt plies are 70 degrees to the upper right, 50 degrees to the upper left, and 30 degrees to the upper right.

Each of the tires was a high performance tire for a passenger car having the size of 245/55R17, and carcass layer of each tire was constituted by two carcass plies in which nylon cords that cross the tire equator S at 90 degrees are embedded. Belt cords constituted by strands of three steel filaments having a diameter of 0.15 mm were embedded at a placement interval of 1.0 mm in the belt ply of each tire, while reinforcement cords constituted by strands of aromatic polyamide filaments and having a diameter of 0.7 mm were embedded at a placement interval of 1.0 mm in the belt reinforcement layer of each tire.

Then, internal pressure of 220 kPa was charged into each tire, then a coating was applied to an outer surface of a tread portion, and the tread portion was pushed on white paper under load of 6 kN before the coating dries to transfer a ground contact shape onto the paper. Then, a maximum length in a direction of the tire equator in the ground contact shape of each tire was measured.
The results were that the length in the conventional tire 6 was 132 mm, while the lengths in the embodiment tires 7 and 8 were increased to 139 mm and 145 mm, respectively, because of a reduction in circumferential out-of-plane bending rigidity. The length in the comparative tire 7 was reduced to 125 mm because of an increase in out-of-plane bending rigidity.

Next, each tire was mounted to a high performance passenger car, and a skilled test driver drove the car on a dry road surface of a circuit at a maximum speed of 200 km an hour, and evaluated steering stability.
The evaluations on a scale of 100 are as follows. Steering stability of the conventional tire 6 was 70 and steering stability of the comparative tire 7 was 60, while steering stability of the embodiment tire 7 was increased to 80 and steering stability of the embodiment tire 8 was increased to 75. This may be because the ground contact length was increased to increase the ground contact area as described above. The evaluation on the embodiment tire 8 is lower than the evaluation on the embodiment tire 7, which may be because an average inclination angle θ of the belt cords was larger than that in the embodiment tire 7, and thus shearing rigidity of the belt layer was lower than that of the embodiment tire 7.

Next, the skilled test driver on the same passenger car as described above drove the car on an irregular road and a motorway junction prepared on a test course, and evaluated vibration riding comfort. The evaluations on a scale of 10 are as follows. Vibration riding comfort of the conventional tire 6 was 6 and vibration riding comfort of the comparative tire 7 was 5, while vibration riding comfort of the embodiment tire 7 was increased to 7 and vibration riding comfort of the embodiment tire 8 was increased to 8.

The present invention can be applied to pneumatic tires in which a belt reinforcement layer adjacent a belt layer is placed in a tread portion.

## Claims

1. A pneumatic tire (11) comprising:
a carcass layer (18) having opposite ends in a width direction folded around bead cores (12) and toroidally extending;
a belt layer (23; 41) placed radially outward of the carcass layer and constituted by at least two belt plies (24, 25; 42, 43, 44) in which non-stretching belt cords (26, 27; 46, 47) inclined with respect to the tire equator (S) are embedded;
a tread (31) placed radially outward of said belt layer; and
a belt reinforcement layer (35; 40) placed adjacent said belt layer (23; 41) and in which non-stretching reinforcement cords (37) extending substantially in parallel with the tire equator (S) are embedded,
wherein circumferential bending rigidity of a contact belt ply (25; 42) placed in contact with the belt reinforcement layer (35; 40) among said belt plies is higher than circumferential bending rigidity of the remaining belt ply or plies (24; 43, 44), and **characterized in that** the belt reinforcement layer (35; 40) and the contact belt ply (25; 42) are arranged to be positioned near a neutral axis of bending, the neutral axis of bending being positioned near a boundary between the contact belt ply (42) and the next adjacent belt ply (43).
2. A pneumatic tire as claimed in claim 1, wherein a remote belt ply (24) most apart from the belt reinforcement layer (35) among said belt plies has the minimum circumferential bending rigidity among the belt plies.
3. A pneumatic tire as claimed in claim 1or 2, wherein the Young's modulus of the belt cord (27) embedded in said contact belt ply (25) is higher than the Young's modulus of the belt cord (26) embedded in the remaining belt ply (24), and thus the circumferential bending rigidity of the contact belt ply is higher than the circumferential bending rigidity of the remaining belt ply.
4. A pneumatic tire as claimed in claim 3, wherein the belt cord (27) in said contact belt ply (25) is made of steel, and the belt cord (26) in said remaining belt ply (24) is made of organic fiber.
5. A pneumatic tire as claimed in claim 3, wherein the belt cord (27) in said contact belt ply (25) is made of steel, and the belt cord (26) in said remaining belt ply (24) is made of glass fiber.
6. A pneumatic tire as claimed in any of claims 1 to 5, wherein the diameter of the belt cord (27) embedded in said contact belt ply (25) is larger than the diameter of the belt cord (26) embedded in the remaining belt ply (24), and thus the circumferential bending rigidity of the contact belt ply is higher than the circumferential bending rigidity of the remaining belt ply.
7. A pneumatic tire as claimed in any of claims 1to 6, wherein a placement interval of the belt cords (27) embedded in said contact belt ply (25) is smaller than a placement interval of the belt cords (26) embedded in the remaining belt ply (24), and thus the circumferential bending rigidity of the contact belt ply is higher than the circumferential bending rigidity of the remaining belt ply.
8. A pneumatic tire as claimed in any of claims 1 to 7, wherein when the belt ply placed most adjacent to the belt reinforcement layer (35) among said belt plies (24, 25) is an adjacent belt ply (25), and the belt ply next adjacent to the belt reinforcement layer is a next adjacent belt ply (24), inclination angles (θ) of the belt cords (27, 26) embedded in the adjacent belt ply (25) and the next adjacent belt ply (24) with respect to the tire equator (S) are increased in said order.
9. A pneumatic tire as claimed in claim 8, wherein when said belt layer (41) is constituted by three belt plies (42, 43, 44), and the belt ply most apart from the belt reinforcement layer (40) is a remote belt ply (44), an inclination angle (θ) of the belt cord (47) embedded in said remote belt ply with respect to the tire equator (S) is larger than an inclination angle (θ) of the belt cord (46) embedded in the next adjacent belt ply (43) with respect to the tire equator (S).
10. A pneumatic tire as claimed in claim 8, wherein when said belt layer (41) is constituted by three belt plies (42, 43, 44), and the belt ply most apart from the belt reinforcement layer (40) is a remote belt ply (44), an inclination angle (θ) of the belt cord (47) embedded in said remote belt ply with respect to the tire equator (S) is the same as an inclination angle (θ) of the belt cord (46) embedded in the next adjacent belt ply (43) with respect to the tire equator (S).
11. A pneumatic tire as claimed in any of claims 8 to 10, wherein the inclination angle θ of the belt cord embedded in said next adjacent belt ply (43) with respect to the tire equator (S) is 45 degrees or more.
12. A pneumatic tire as claimed in any of claims 8 to 11, wherein said belt reinforcement layer (40) is placed between the belt layer (41) and the carcass layer (18).
13. A pneumatic tire as claimed in any of claims 8 to 12, wherein said belt reinforcement layer (40) is formed by winding, into a spiral shape, a ribbon-like member constituted by one or more reinforcement cords arranged in parallel and rubber-coated.

## Patentansprüche

1. Luftreifen (11), der Folgendes umfasst:
eine Karkassenlage (18) mit entgegengesetzten Enden in einer Breitenrichtung, die um Wulstkerne (12) gefaltet ist und sich kreisringförmig erstreckt,
eine Gürtellage (23; 41), die in Radialrichtung von der Karkassenlage nach außen angeordnet ist und durch wenigstens zwei Gürtelschichten (24, 25; 42, 43, 44) gebildet wird, in denen dehnungsfreie Gürtelkords (26, 27; 46, 47), die in Bezug auf den Reifenäquator (S) geneigt sind, eingebettet sind,
eine Lauffläche (31), die in Radialrichtung von der Gürtellage nach außen angeordnet ist, und
eine Gürtelverstärkungslage (35; 40), die angrenzend an die Gürtellage (23; 41) angeordnet ist, und in der dehnungsfreie Verstärkungskords (37), die sich parallel mit dem Reifenäquator (S) erstrecken, eingebettet sind,
wobei die Umfangsbiegesteifigkeit einer in Kontakt mit der Gürtelverstärkungslage (35; 40) gebrachten Kontaktgürtelschicht (25; 42) unter den Gürtelschichten höher ist als die Umfangsbiegesteifigkeit der verbleibenden Gürtelschicht oder -schichten (24; 43, 44), und **dadurch gekennzeichnet, dass** die Gürtelverstärkungslage (35; 40) und die Kontaktgürtelschicht (25; 42) so angeordnet sind, dass sie nahe einer neutralen Biegungsachse positioniert sind, wobei die neutrale Biegungsachse nahe einer Grenze zwischen der Kontaktgürtelschicht (42) und der nächsten benachbarten Gürtelschicht (43) positioniert ist.

2. Luftreifen nach Anspruch 1, wobei eine ferne Gürtelschicht (24), die unter den Gürtelschichten am weitesten von der Gürtelverstärkungslage (35) entfernt ist, die minimale Umfangsbiegesteifigkeit unter den Gürtelschichten hat.

3. Luftreifen nach Anspruch 1 oder 2, wobei der Elastizitätsmodul des in der Kontaktgürtelschicht (25) eingebetteten Gürtelkords (27) höher ist als der Elastizitätsmodul des in der verbleibenden Gürtelschicht (24) eingebetteten Gürtelkords (26) und folglich die Umfangsbiegesteifigkeit der Kontaktgürtelschicht höher ist als die Umfangsbiegesteifigkeit der verbleibenden Gürtelschicht.

4. Luftreifen nach Anspruch 3, wobei der Gürtelkord (27) in der Kontaktgürtelschicht (25) aus Stahl hergestellt ist und der Gürtelkord (26) in der verbleibenden Gürtelschicht (24) aus organischer Faser hergestellt ist.

5. Luftreifen nach Anspruch 3, wobei der Gürtelkord (27) in der Kontaktgürtelschicht (25) aus Stahl hergestellt ist und der Gürtelkord (26) in der verbleibenden Gürtelschicht (24) aus Glasfaser hergestellt ist.

6. Luftreifen nach einem der Ansprüche 1 bis 5, wobei der Durchmesser des in der Kontaktgürtelschicht (25) eingebetteten Gürtelkords (27) größer ist als der Durchmesser des in der verbleibenden Gürtelschicht (24) eingebetteten Gürtelkords (26) und folglich die Umfangsbiegesteifigkeit der Kontaktgürtelschicht höher ist als die Umfangsbiegesteifigkeit der verbleibenden Gürtelschicht.

7. Luftreifen nach einem der Ansprüche 1 bis 6, wobei ein Anordnungsabstand der in der Kontaktgürtelschicht (25) eingebetteten Gürtelkords (27) kleiner ist als ein Anordnungsabstand der in der verbleibenden Gürtelschicht (24) eingebetteten Gürtelkords (26) und folglich die Umfangsbiegesteifigkeit der Kontaktgürtelschicht höher ist als die Umfangsbiegesteifigkeit der verbleibenden Gürtelschicht.

8. Luftreifen nach einem der Ansprüche 1 bis 7, wobei, wenn die Gürtelschicht, die unter den Gürtelschichten (24, 25) am meisten angrenzend an die Gürtelverstärkungslage (35) angeordnet ist, eine angrenzende Gürtelschicht (25) ist und die nächste an die Gürtelverstärkungslage angrenzende Gürtelschicht eine nächste angrenzende Gürtelschicht (24) ist, die Neigungswinkel (θ) der in der angrenzenden Gürtelschicht (25) und der nächsten angrenzenden Gürtelschicht (24) eingebetteten Gürtelkords (27, 26) in Bezug auf den Reifenäquator (S) in der Reihenfolge gesteigert werden.

9. Luftreifen nach Anspruch 8, wobei, wenn die Gürtellage (41) durch drei Gürtelschichten (42, 43, 44) gebildet wird und die am weitesten von der Gürtelverstärkungslage (40) entfernte Gürtelschicht eine ferne Gürtelschicht (44) ist, ein Neigungswinkel (θ) des in der fernen Gürtelschicht eingebetteten Gürtelkords (47) in Bezug auf den Reifenäquator (S) größer ist als ein Neigungswinkel (θ) des in der nächsten angrenzenden Gürtelschicht (43) eingebetteten Gürtelkords (46) in Bezug auf den Reifenäquator (S).

10. Luftreifen nach Anspruch 8, wobei, wenn die Gürtellage (41) durch drei Gürtelschichten (42, 43, 44) gebildet wird und die am weitesten von der Gürtelverstärkungslage (40) entfernte Gürtelschicht eine ferne Gürtelschicht (44) ist, ein Neigungswinkel (θ) des in der fernen Gürtelschicht eingebetteten Gürtelkords (47) in Bezug auf den Reifenäquator (S) der gleiche ist wie ein Neigungswinkel (θ) des in der nächsten angrenzenden Gürtelschicht (43) eingebetteten Gürtelkords (46) in Bezug auf den Reifenäquator (S).

11. Luftreifen nach einem der Ansprüche 8 bis 10, wobei der Neigungswinkel (θ) des in der nächsten angrenzenden Gürtelschicht (43) eingebetteten Gürtelkords (46) in Bezug auf den Reifenäquator (S) 45 Grad oder mehr beträgt.

12. Luftreifen nach einem der Ansprüche 8 bis 11, wobei die Gürtelverstärkungslage (40) zwischen der Gürtellage (41) und der Karkassenlage (18) angeordnet ist.

13. Luftreifen nach einem der Ansprüche 8 bis 12, wobei die Gürtelverstärkungslage (40) geformt ist durch Wickeln eines bandartigen Elements, das durch einen oder mehrere Verstärkungskords, die parallel angeordnet und gummibeschichtet sind, gebildet wird, zu einer spiraligen Form.

## Revendications

1. Bandage pneumatique (11), comprenant :
une couche de carcasse (18), comportant des extrémités opposées dans une direction de la largeur, repliées autour de tringles (12) et s'étendant de manière toroïdale;
une couche de ceinture (23; 41), agencée radialement vers l'extérieur de la couche de carcasse et constituée par au moins deux nappes de ceinture (24, 25; 42, 43, 44), dans lesquelles sont noyés des câblés de ceinture non étirables (26, 27; 46, 47), inclinés par rapport à l'équateur (S) du bandage pneumatique;
une bande de roulement (31), agencée radialement vers l'extérieur de ladite couche de ceinture; et
une couche de renforcement de la ceinture (35; 40) agencée en un point adjacent à ladite couche de ceinture (23; 41), dans laquelle sont noyés des câblés de renforcement non étirables (37), s'étendant de manière pratiquement parallèle à l'équateur (S) du bandage pneumatique;
dans lequel la rigidité à la flexion circonférentielle d'une nappe de ceinture de contact (25; 42), agencée en contact avec la couche de renforcement de la ceinture (35; 40), parmi lesdites nappes de ceinture, est supérieure à la rigidité à la flexion circonférentielle de la ou des nappes de ceinture restantes (24; 43, 44), et **caractérisé en ce que** la couche de renforcement de la ceinture (35; 40) et la nappe de ceinture de contact (25; 42) sont agencées de sorte à être positionnées près d'un axe de flexion neutre, l'axe de flexion neutre étant positionné près d'une limite entre la nappe de ceinture de contact (42) et la nappe de ceinture adjacente suivante (43).

2. Bandage pneumatique selon la revendication 1, dans lequel une nappe de ceinture éloignée (24), la plus espacée de la couche de renforcement de la ceinture (35), parmi lesdites nappes de ceinture, présente la rigidité à la flexion circonférentielle minimale parmi les nappes de ceinture.

3. Bandage pneumatique selon les revendications 1 ou 2, dans lequel le module de Young du câblé de ceinture (27) noyé dans ladite nappe de ceinture de contact (25) est supérieur au module de Young du câblé de ceinture (26) noyé dans la nappe de ceinture restante (24), la rigidité à la flexion circonférentielle de la nappe de ceinture de contact étant ainsi supérieure à la rigidité à la flexion circonférentielle de la nappe de ceinture restante.

4. Bandage pneumatique selon la revendication 3, dans lequel le câblé de ceinture (27) dans ladite nappe de ceinture de contact (25) est composé d'acier, le câblé de ceinture (26) dans ladite nappe de ceinture restante (24) étant composé de fibres organiques.

5. Bandage pneumatique selon la revendication 3, dans lequel le câblé de ceinture (27) dans ladite nappe de ceinture de contact (25) est composé d'acier, le câblé de ceinture (26) dans ladite nappe de ceinture restante (24) étant composé de fibres de verre.

6. Bandage pneumatique selon l'une quelconque des revendications 1 à 5, dans lequel le diamètre du câblé de ceinture (27) noyé dans ladite nappe de ceinture de contact (25) est supérieur au diamètre du câblé de ceinture (26) noyé dans la nappe de ceinture restante (24), la rigidité à la flexion circonférentielle de la nappe de ceinture de contact étant ainsi supérieure à la rigidité à la flexion circonférentielle de la nappe de ceinture restante.

7. Bandage pneumatique selon l'une quelconque des revendications 1 à 6, dans lequel un intervalle de positionnement des câblés de ceinture (27) noyés dans ladite nappe de ceinture de contact (25) est plus petit qu'un intervalle de positionnement des câblés de ceinture (26) noyés dans la nappe de ceinture restante (24), la rigidité à la flexion circonférentielle de la nappe de ceinture de contact étant ainsi supérieure à la rigidité à la flexion circonférentielle de la nappe de ceinture restante.

8. Bandage pneumatique selon l'une quelconque des revendications 1 à 7, dans lequel la nappe de ceinture agencée le plus près de la couche de renforcement de la ceinture (35), parmi lesdites nappes de ceinture (24, 25), est une nappe de ceinture adjacente (25), la nappe de ceinture agencée en un point adjacent suivant à la couche de renforcement de la ceinture étant une nappe de ceinture adjacente suivante (24), les angles d'inclinaison (θ) formés par les câblés de ceinture (27, 26) noyés dans la nappe de ceinture adjacente (25) et dans la nappe de ceinture adjacente suivante (24) par rapport à l'équateur (S) du bandage pneumatique (S) étant accrus dans ledit ordre.

9. Bandage pneumatique selon la revendication 8, dans lequel ladite couche de ceinture (41) est constituée par trois nappes de ceinture (42, 43, 44), la nappe de ceinture la plus éloignée de la couche de renforcement de la ceinture (40) étant une nappe de ceinture éloignée (44), un angle d'inclinaison (θ) formé par le câblé de ceinture (47) noyé dans ladite nappe de ceinture éloignée par rapport à l'équateur (S) du bandage pneumatique étant supérieur à un angle d'inclinaison (θ) formé par le câblé de ceinture (46) noyé dans la nappe de ceinture adjacente suivante (43) par rapport à l'équateur (S) du bandage pneumatique.

10. Bandage pneumatique selon la revendication 8, dans lequel ladite couche de ceinture (41) est constituée par trois nappes de ceinture (42, 43, 44), la nappe de ceinture la plus éloignée de la couche de renforcement de la ceinture (40) étant une nappe de ceinture éloignée (44), un angle d'inclinaison (θ) formé par le câblé de ceinture (47) noyé dans ladite nappe de ceinture éloignée par rapport à l'équateur (S) du bandage pneumatique étant identique à un angle d'inclinaison (θ) formé par le câblé de ceinture (46) noyé dans la nappe de ceinture adjacente suivante (43) par rapport à l'équateur (S) du bandage pneumatique.

11. Bandage pneumatique selon l'une quelconque des revendications 8 à 10, dans lequel l'angle d'inclinaison (θ) formé par le câblé de ceinture (46) noyé dans la nappe de ceinture adjacente suivante (43) par rapport à l'équateur (S) du bandage pneumatique correspond à 45 degrés ou plus.

12. Bandage pneumatique selon l'une quelconque des revendications 8 à 11, dans lequel ladite couche de renforcement de la ceinture (40) est agencée entre la couche de ceinture (41) et la couche de carcasse (18).

13. Bandage pneumatique selon l'une quelconque des revendications 8 à 12, dans lequel ladite couche de renforcement de la ceinture (40) est formée en enroulant, dans une forme en spirale, un élément de type ruban constitué par un ou plusieurs câblés de renforcement agencés de manière parallèle et revêtus de caoutchouc.
